**Europäisches Patentamt**

**European Patent Office**

**Office européen des brevets**

(19)

(11) Publication number : **0 435 866 B1**

(12)

# EUROPEAN PATENT SPECIFICATION

(45) Date of publication of patent specification :
**19.02.92 Bulletin 92/08**

(51) Int. Cl.⁵ : **C04B 7/12**

(21) Application number : **88909621.0**

(22) Date of filing : **23.09.88**

(86) International application number :
**PCT/SE88/00494**

(87) International publication number :
**WO 90/03341 05.04.90 Gazette 90/08**

(54) **COOLING OF SCISSORS FOR CUTTING OF GLASS GOBS.**

(43) Date of publication of application :
**10.07.91 Bulletin 91/28**

(45) Publication of the grant of the patent :
**19.02.92 Bulletin 92/08**

(84) Designated Contracting States :
**AT BE CH DE FR GB IT LI LU NL SE**

(56) References cited :
**DE-B- 2 304 009**
**GB-A- 338 089**
**US-A- 3 800 344**
**US-A- 4 652 292**

(73) Proprietor : **AGA AKTIEBOLAG**
**S-181 81 Lidingö (SE)**

(72) Inventor : **MENZEL, Paul**
**Hufnerstrasse 18**
**W-2000 Hamburg 76 (DE)**

(74) Representative : **Wiedemann, Bernd et al**
**AGA AKTIEBOLAG Patent Department**
**S-181 81 Lidingö (SE)**

EP 0 435 866 B1

## Description

The present invention relates to a method for cooling a cutting element of shears used to server a glass gob from a continuous string of liquid glass in the manufacture of glass objects, for instance glass bottles, the method comprising discharging a string of liquid glass mass from a glass melting furnace and cutting the liquid glass string into appropriate lengths with the aid of shears to form gobs or drops and cooling the cutting elements of the shears with a cooling liquid. The invention also relates to apparatus for carrying out the method.

When making glass, and particularly when manufacturing glass objects, such as bottles for instances, there is first prepared a mass of liquid glass of predetermined composition and of suitable temperature and viscosity. The glass mass is normally taken from the furnace in the form of one or two glass strings which are cut into lengths, i.e. sizes, suitable for the application or purpose intented. In this respect, the liquid glass string is passed vertically through a ring at a constant speed. The string is severed immediately beneath the ring with the aid of shears, which clip from the string pieces or gobs of glass of predetermined size at predetermined time intervals, normally of constant frequency. When two mutually parallel strings of liquid glass are taken from the furnace and passed to mutually the same machine, the shears will be provided with two cutting elements on each leg or arm of the shears, so that the two strings can be clipped simultaneously.

When a glass gob is formed by cutting the string with the aid of said shears, the gob will continue downwards in a chute and enters a mould for producing the object, e.g. a glass bottle.

Since the liquid glass string has a very high temperature when it passes through the ring, e.g. a temperature of 1100°C, it is necessary to cool the cutting elements of the shears. At present this is effected with an aqueous coolant, which is sprayed onto the shears. The coolant includes a lubricant which will ensure that the glass gob is cut cleanly and smoothly from the string. The lubricant is normally a solubilized cutting oil or a biologically degradeable substance which has lubricating properties.

However, it is very difficult to prevent the lubricant-containing water from coming into contact with the glass mass. Such contact will result in the presence of larger or smaller defects in the glass object produced. It is also highly essential that lubricant-containing water will not fall into the chute used to convey the glass 90b into the mould, since otherwise additional defects may occur.

Subsequent to cooling the shears the coolant falls to the floor and also on parts of the machine used to produce the glass objects, therewith dirtying the floor and the machine. Furthermore, it is necessary to collect and cleanse the coolant, before discharging it to a recipient.

One object of the present invention is to provide a method and apparatus which avoid the occurrence of defects in glass objects due to contact of the glass with the water coolant during the manufacture of said objects.

Another object is one of creating a cleaner environment in the vicinity of machines used for the manufacture of glass objects, by avoiding dirtying floor space and machines with water coolant that contains a lubricant.

A further object is to obviate the need to thoroughly cleanse water coolant collected from the surroundings.

GB-A-338 089 discloses a method of cooling and lubricating the shear blades of a glass feeder and a spraying mechanism for carrying out the method. In the method a supply of atomized mixture, such as moistened air, is produced under pressure and discharged onto the retracted shear blades from points located above the level thereof. The adjacent shear blades are cooled and lubricated in the intervals between glass severing operations without projection of spray on to glass discharging from the outlet and without appreciatably altering the temperature of the environment of the discharing glass.

In accordance with the invention these objects are achieved by means of a method for cooling a cutting element of shears used to cut a glass gob from a string of liquid glass in the manufacture of glass objects, e.g. glass bottles, said method comprising taking a string of liquid glass mass from a glass melting furnace, cutting the string into appropriate lengths with the aid of shears to produce glass gobs and cooling the cutting elements of the shears with a liquid. The method is characterised by cooling the cutting elements of the shears with a cryogenic liquid, which is applied to the surfaces of the cutting element which comes into contact with the liquid glass mass. The invention also relates to apparatus for carrying out the method, said apparatus comprising two mutually coacting cutting elements and coolant conduit having a nozzle for bringing the coolant into contact with the cutting elements, and being characterized in that a pressure vessel which incorporates a phase separator is arranged in the conduit at a location between a source of cryogenic liquid and the nozzle.

Preferred embodiments of the invention are set forth in the subsidiary claims dependent on the independent claims.

The present invention will now be described in more detail with reference to non-limiting exemplifying embodiments thereof illustrated in the accompanying drawings.

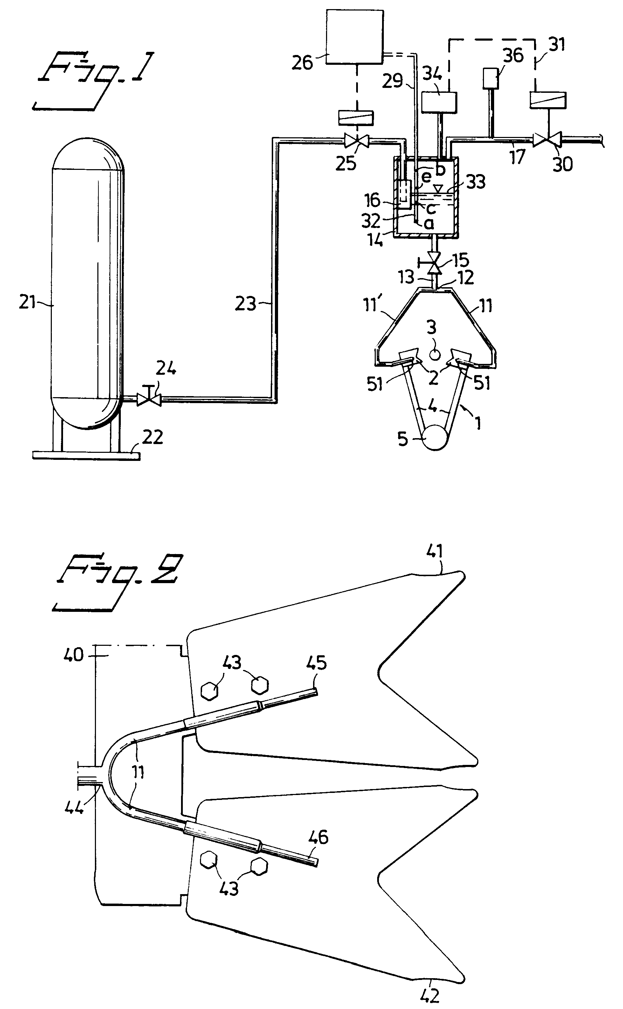

Figure 1 illustrates schematically an arrangement of apparatus for carrying out the inventive method, and Figure 2 illustrates schematically and from above a holder device intended for the attachment of two cutting elements to the legs of the shears, and also illustrates a coolant connection, this embodiment enabling gobs to be cut simultaneously from two molten glass strings.

The arrangement illustrated in Figure 1 includes shears 1 having two legs 4 which can be swung towards and away from one another about a pivot axis 5, which extends perpendicular to the plane of the drawing. At the ends distal from the axis 5, each leg has mounted thereon a cutting element 2 for cutting a glass gob or drop from a string of liquid glass mass 3.

The liquid glass string is taken from a glass melting furnace located above the shears. The glass mass leaves the furnace in the form of a vertical string which travels at a constant speed and which passes through a ring (not shown) located at a short distance above the shears 1. The glass gob separated from the string is transported gravitationally along a chute, to a mould located in a machine (not shown).

The Figure 1 arrangement also includes a storage tank 21 for a cryogenic liquid, e.g. liquid nitrogen or liquid carbon dioxide. The tank 21 rests on a stand or base 22. Extending from the tank 21 is a conduit 23 which leads to a pressure tank 14. Mounted in the conduit 23, adjacent the storage tank 21, is a main closure valve 24, while an electromagnetic valve 25 is mounted in the conduit at a location adjacent the pressure tank 14. The valve 25 is controlled from a control unit 26.

Extending from the bottom of the pressure tank 14 is a conduit 13 which incorporates a manually operated closure valve 15. The conduit 13 branches out into two branch conduits 11 and 11′ at a point downstream of the valve 15. The branch point is referenced 12. The end of each branch conduit 11, 11′ distal from the branch point 12 is connected with a nozzle 51 which is firmly attached to a respective cutting element 2. The nozzle 51 is directed towards its associated cutting element, and particularly towards the cutting surface thereof. The conduits 13, 11 and 11′ are preferably as short as possible, so as to avoid or at least minimize vaporization of the liquid in the conduits to an undesirable gas phase. The conduits are preferably vacuum conduits which include two mutually concentrical steel pipes with a highly effective insulator spaced from the inner surface of the outer steel pipe and with a region of high vacuum located between the insulator and outer pipe. When the branch conduits 11, 11′ are of rigid construction, they may incorporate joints which will enable them to be bent.

The pressure vessel 14 includes a phase separator 16, which may have the form of an upwardly open vessel to which the conduit 23 extends, a sintered body or some other known kind of phase separator. Connected to the top of the pressure tank 14 is a gas pipe 17. The gas pipe 17 incoporates a safety valve 36 which opens automatically when the pressure in the tank 14 exceeds a pre-determined highest pressure, e.g. 4.5 bars. The gas pipe also incorporates an electromagnetic valve 30, which is opened and closed by a pressure sensor 34. The valve 30 is intended to maintain the pressure in the tank 14 constant at a pre-determined level, e.g. 3.5 bars. The pressure tank has mounted therein a level sensor 32, which is intended to indicate four different liquid levels. The lowest liquid level $\underline{a}$ is a warning level, at which the liquid level is excessively low, whereas the highest level $\underline{b}$ is a warning level, at which the liquid level is excessively high. Of the intermediate liquid levels, between the aforementioned levels, the lower level $\underline{c}$ is the lowest level for the liquid phase and the level of liquid in the vessel at which the valve 25 must be opened for the delivery of cryogenic liquid. The fourth level $\underline{e}$ indicates the liquid level at which the electromagnetic valve must be closed.

The level sensor 32 is connected by a line 29 to the control unit 26 which controls opening and closing of the electromagnetic valve 25.

Figure 2 illustrates schematically a holder device 40 on which two cutting elements 41, 42 are arranged for attachment to the legs 4 of the shears illustrated in Figure 1. This will enable two strings of liquid glass to be cut into gobs simultaneously. The cutting elements 41, 42 are attached to the holder device, by means, for instance, of bolts 43, therewith enabling the cutting elements to be replaced. The end of the gas pipe 13 (not shown in Figure 2) distal from the pressure tank 14 is fitted with a T-piece 44, the two free ends of which are each connected to a respective conduit 11. The conduit 11 is attached to the cutting element and optionally also the holder device 40 with the aid of means not shown. Each of the conduits 11 is provided with a respective nozzle 45 and 46, which are spaced from the cutting surface of respective cutting elements 41, 42. The nozzles 45, 46 are directed towards the cutting surfaces of respective cutting elements 41 and 42, for optimal cooling of said surfaces.

It will be understood that the respective conduits carrying nozzles 51, 45, 46 may be connected directly to a pressure tank 14 or to individual pressure tanks 14.

When initiating cooling of the shears 1 (Figure 1) with cryogenic liquid, the valve 24 and the valve 25 incorporated in the conduit 23 are opened. When these valves are open, cryogenic liquid, for instance nitrogen, carbon dioxide, argon, is forced by the pressure in the tank 21 through the conduit 23 and into the pressure tank 14. The liquid flows into the container of the phase separator 16, where gas present in the liquid will rise upwards. When the phase separator container is full, the liquid will flow over the upper defining surface of the container and enter the pressure tank 14 itself. When the pressure in the tank 14 has reached a pre-determined value, e.g. 3.5 bars, as a result of gas present in the tank 14, the valve 30 is opened. The pressure in the tank 14 is measured with the aid of a pressure gauge 34, which causes the valve 30 to open when the pressure has reached said pre-determined value, and will cause the valve 30 to close when said pressure falls from a high value to the pre-determined value.

When the liquid level 33 in the pressure tank 14 has risen to the upper liquid level e, which is indicated by the level sensor 32, the valve 25 is closed by the control unit 26, which receives control signals from the level sensor or gauge. The valve 15 is then opened and liquid begins to flow from the tank 14 through the branch conduits 11, 11′ and the nozzles 51, these nozzles themselves being cooled from ambient temperature to working temperature and also cooling the cutting surfaces of the cutting elements 2.

When the level of liquid in the tank 14 has fallen to the lower, pre-determined level c, the valve 25 is again opened.

Subsequent to commencing cooling of the shears 1, a string of liquid glass can be taken from the furnace and passed vertically through the ring located above the shears 1, so as to initiate the cutting of glass gobs from the string. The cutting elements 2 mutually co-act in cutting gobs from the string, in a manner similar to the blades of conventional scissors.

In accordance with a preferred embodiment of the present invention the shears 1 are preferentially cooled continuously, since if a valve or like device is closed there is generated a gas phase which reduces the cooling effect. It is also highly advantageous to cool the upper surface of the cutting element 2 with a cryogenic liquid, since such liquid will obtain a given residence or stay time and therewith exert a better cooling effect than would have been possible if the cryogenic liquid had been applied to the undersurface of the cutting element, where such a residence or stay time is not present. It will be understood, however, that both the upper surface and the lower surface of respective shear cutting elements can be cooled. Notwithstanding this it has been found sufficient, however, to cool solely the upper surface of the shears 1.

It has also been found advantageous to direct the cryogenic liquid onto the cutting surfaces of the cutting elements 2 with the greatest possible precision, and then preferably against those cutting surfaces which come into contact with the liquid glass. It has also been found that the pressure of the liquid leaving the nozzle 51 should lie within the range of 0.2-2 bars, preferably 0.5-1 bar.

In accordance with the present invention, it is also highly advantageous to separate the gas phase present in the cryogenic liquid at the shortest possible distance from the nozzles 51, so as to thereby enhance the cooling effect of the cryogenic liquid.

## Claims

1. A method of cooling a cutting element (2;41,42) of shears (1) used to cut a string (3) of liquid glass into gobs for the manufacture of glass objects, for instance glass bottles, in which a string (3) of liquid glass mass is taken from a glass melting furnace and cut by said shears into appropriate lengths to form said glass gobs, while cooling said cutting element (2;41,42) with a liquid, characterized by cooling the cutting element (2;41,42) of said shears with a cryogenic liquid and applying said cryogenic liquid to cutting element (2;41,42) surfaces which come into contact with the liquid glass mass.

2. A method according to Claim 1, **characterized** in that the liquid used is liquid nitrogen or liquid carbon dioxide.

3. A method according to Claim 1 or Claim 2, **characterized** by directing the cryogenic liquid onto the horizontal, upwardly facting surface of said cutting element (2;41,42).

4. A method according to one or more of Claims 1-3, **characterized** by isolating a gas phase from the cryogenic liquid immediately prior to applying said liquid to said cutting elements (2;41,42).

5. A method according to one or more of Claims 1-4, **characterized** by spraying cryogenic liquid onto said cutting elements (2;41,42) at a pressure of 0.2-2 bars, preferably 0.5-1 bar.

6. A method according to Claim 5, **characterized** by spraying cryogenic liquid continuously onto the cutting element (2;41,42) of said shears.

7. An arrangement for cutting a glass gob from a string (3) of liquid glass in the manufacture of glass objects, for instance the manufacture of glass bottles, said arrangement including two mutually co-acting cutting elements (2;41,42) for cutting said string (3) of liquid glass and coolant conduits (23,13,11,11′) provided with nozzles (51;45,46) for bringing a coolant into contact with the cutting elements (2;41,42), **characterized** by a pressure vessel (14) which includes a phase separator (16) in the conduit (23,13,11,11′) between a source (21) of cryogenic liquid and the nozzle (51;45,46).

8. An arrangement according to Claim 7, **characterized** in that the pressure vessel (14) is provided with a gas valve (30) which is effective in holding the pressure in the vessel (14) constant.

9. An arrangement according to Claim 7 or Claim 8, **characterized** in that the pressure vessel (14) is provided with a level sensor (32) for maintaining the liquid level (33) in the pressure vessel (14) within a range between a pre-determined highest level (e) and a pre-determined lowest level (c).

10. An arrangement according to Claims 7, 8 or 9, **characterized** in that the nozzle (51;45,46) on the conduit (11,11′) is arranged to direct a stream of cryogenic liquid onto that part of the cutting element (2;41,42) which comes into contact with the liquid glass.

**Patentansprüche**

1. Verfahren zum Kühlen eines Schneidelementes (2;41,42) einer zum Schneiden eines Stranges (3) aus flüssigem Glas in Tropfen zur Herstellung von Glasgegenständen, z.B. Glasflaschen, verwendeten Schere (1), wobei ein Strang (3) aus flüssiger Glasmasse aus einem Schmelzofen entnommen wird und mittels der genannten Schere in geeignete Längen zur Bildung der genannten Glastropfen zerschnitten wird, während das genannte Schneidelement (2;41,42) mit einer Flüssigkeit gekühlt wird, gekennzeichnet durch Kühlen des Schneidelementes (2;41,42) der genannten Schere mit einer Kühlflüssigkeit und Anwenden der genannten Kühlflüssigkeit auf die Oberflächen des Schneidelementes (2;41,42), die mit der flüssigen Glasmasse in Berührung kommen.

2. Verfahren nach Anspruch 1, dadurch gekennzeichnet, dass die verwendete Flüssigkeit flüssiger Stickstoff oder flüssiges Kohlendiodxid ist.

3. Verfahren nach Anspruch 1 oder 2, dadurch gekennzeichnet, dass die Kühlflüssigkeit auf die horizontale, nach oben weisende Fläche des genannten Schneidelementes (2;41,42) gerichtet ist.

4. Verfahren nach einem oder mehreren der Ansprüche 1 bis 3, gekennzeichnet durch Isolieren einer Gasphase aus der Kühlflüssigkeit unmittelbar vor dem Aufbringen der genannten Flüssigkeit auf die genannten Schneidelemente (2;41,42).

5. Verfahren nach einem oder mehreren der Ansprüche 1 bis 4, gekennzeichnet durch Aufsprühen der Kühlflüssigkeit auf die genannten Schneidelemente (2;41,42) mit einem Druck von 0,2 bis 2 bar, vorzugsweise 0,5 bis 1 bar.

6. Verfahren nach Anspruch 5, gekennzeichnet durch kontinuierliches Aufsprühen der Kühlflüssigkeit auf das Schneidelement (2;41,42) der genannten Schere.

7. Anordnung zum Schneiden eines Glastropfens aus einem Strang (3) aus flüssigem Glas bei der Herstellung von Glasgegenständen, z.B. bei der Herstellung von Glasflaschen, wobei die Anordnung zwei gegenseitig zusammenwirkende Schneidelemente (2;41,42) zum Schneiden des genannten Stranges (3) aus flüssigem Glas und Kühlleitungen (23,13,11,11') aufweist, die mit Düsen (51;45,46) versehen sind, um die Kühlflüssigkeit mit den Schneidelementen (2;41,42) in Kontakt zu bringen, gekennzeichnet durch einen Druckbehälter (14), der in der Leitung (23,13, 11,11') zwischen einer Quelle (21) des Kühlmittels und den Düsen (51;45,46) einen Phasentrenner (16) aufweist.

8. Anordnung nach Anspruch 7, dadurch gekennzeichnet, dass der Druckbehälter (14) mit einem Gasventil (30) versehen ist, das den Druck im Druckbehälter (14) konstant hält.

9. Anordnung nach Anspruch 7 oder 8, dadurch gekennzeichnet, dass der Druckbehälter (14) mit einem Füllstandsensor (32) versehen ist, um den Flüssigkeitsstand (33) im Druckbehälter (14) in einem Bereich zwischen einem vorbestimmten Grösstwert (e) und einem vorbestimmten Kleinstwert (c) zu halten.

10. Anordnung nach den Ansprüchen 7, 8 oder 9, dadurch gekennzeichnet, dass die Düse (51;45,46) in der Leitung (11,11') so angeordnet ist, um einen Strom aus dem Kühlmittel auf den Teil des Schneidelementes (2;41,42) zu richten, der mit dem flüssigen Glas in Berührung kommt.

**Revendications**

1. Procédé de refroidissement d'un élément de coupe (2;41,42) de cisailles (1) utilisées pour couper un boudin (3) de verre liquide et le séparer en paraisons pour la fabrication d'objets en verre, par exemple des bouteilles de verre, procédé dans lequel on fait sortir un boudin (3) d'une masse de verre liquide hors d'un four de fusion du verre et, au moyen desdites cisailles, on le coupe en longueurs appropriées pour obtenir lesdites paraisons de verre, tout en refroidissant ledit élément de coupe (2;41,42) avec un liquide, procédé caractérisé par le fait que l'on refroidit l'élément de coupe (2;41,42) desdites cisailles avec un liquide cryogénique et que l'on applique ledit liquide cryogénique aux surfaces de l'élément de coupe (2;41,42) qui viennent en contact avec la masse de verre liquide.

2. Procédé selon la revendication 1, caractérisé par le fait que le liquide utilisé est de l'azote liquide ou du dioxyde de carbone liquide.

3. Procédé selon la revendication 2, caractérisé par le fait que l'on envoie le liquide cryogénique sur la surface horizontale, faisant face vers le haut, dudit élément de coupe (2;41,42).

4. Procédé selon l'une ou plusieurs des revendications 1-3, caractérisé par le fait que l'on isole une phase gazeuse d'avec le liquide cryogénique immédiatement avant d'appliquer ledit liquide sur lesdits éléments de coupe (2;41,42).

5. Procédé selon l'une ou plusieurs des revendications 14, caractérisé par le fait que l'on pulvérise le liquide cryogénique sur lesdits éléments de coupe (2;41,42) sous une pression de 0,2-2 bars, de préférence 0,5-1 bar.

6. Procédé selon la revendication 5, caractérisé par le fait que l'on pulvérise en continu le liquide cryogénique sur l'élément de coupe (2;41,42) desdites cisailles.

7. Dispositif pour couper et séparer une paraison de verre d'avec un boudin (3) de verre liquide dans la fabrication d'objets en verre, par exemple dans la fabrication de bouteilles de verre, ledit dispositif comportant deux éléments de coupe (2;41,42) mutuellement coopérant pour couper ledit boudin (3) de verre liquide et des conduites (23,13,11,11') de réfrigérant munies de buses (51;45,46) pour amener un réfrigérant en contact avec les éléments de coupe (2;41,42), dispositif caractérisé par un récipient sous pression (14) qui comporte un séparateur de phase (16) sur la conduite (23,13,11,11') située entre une source (21) de liquide cryogénique et la buse (51;45,46).

8. Dispositif selon la revendication 7, caractérisé par le fait que le récipient sous pression (14) comporte une vanne à gaz (30) qui intervient pour maintenir constante la pression dans le récipient (14).

9. Dispositif selon la revendication 7 ou la revendication 8, caractérisé par le fait que le récipient sous pression (14) comporte un détecteur de niveau (32) pour maintenir le niveau du liquide (33) dans le récipient sous pression (14) sur une plage, entre un niveau le plus élevé prédéterminé (e) et un niveau le plus bas prédéterminé (c).

10. Dispositif selon les revendications 7, 8 ou 9, caractérisé par le fait que la buse (51;45,46) qui se trouve sur la conduite (11,11') est disposée pour envoyer un flux de liquide cryogénique sur la partie de l'élément de coupe (2;41,42) qui vient en contact avec le verre liquide.

Fig. 1

Fig. 2